# EUROPÄISCHE PATENTSCHRIFT

(11) **EP 4 193 879 B1**
(45) Veröffentlichungstag und Bekanntmachung des Hinweises auf die Patenterteilung: **02.04.2025**
(21) Anmeldenummer: 22020608.0
(22) Anmeldetag: 12.12.2022
(51) Int. Cl.: A47B 88/49, F16C 29/02

(54) **TELESKOPSCHIENE**
TELESCOPIC RAIL
RAIL TÉLESCOPIQUE

(43) Veröffentlichungstag der Anmeldung: 14.06.2023
(73) Patentinhaber: TRANSPOfix Transporthilfsmittel- und Bodenbeläge-Herstellungs - und Vertriebs- GmbH, 92334 Berching (DE)
(72) Erfinder: FEDERL, Daniel, 92331 Parsberg-Herrnried (DE)
(74) Vertreter: Blum, Heike

(56) Entgegenhaltungen:
- EP-A1- 1 571 357
- CA-C- 1 299 528

## Beschreibung

Die Erfindung betrifft eine Teleskopschiene, die als Gleitschiene ausgebildet ist und wenigstens zwei gleitend gegeneinander verschiebbar angeordnete Schienenelemente aufweist, wobei die Schienenelemente aus Metall, vorzugsweise aus Stahl, hergestellt sind.

Eine Teleskopschienenführung, wie in der DE 103 40 482 A1 offenbart, (kurz: Teleskopschiene) ist eine Schienenführung, die zur Verringerung der Reibung für Auszüge (wie Schubladen) an Möbeln, Küchen, Backöfen, Feuerwehrfahrzeugen usw. eingesetzt wird. Synonyme Bezeichnungen sind Teleskopauszug und Teleskopausziehträger.

Man unterscheidet je nach Auszugsmöglichkeit Teleskopschienen mit Teil-, Voll- und Überauszug. Je nach Schienentyp können Teleskopschienen mit einer sogenannten Schnellentriegelung ausgerüstet sein, die eine schnelle Trennung zweier Teleskopschienenteile (z. B. zur Entnahme aus einem Transportbehälter) ermöglicht.

Teleskopschienen werden in den verschiedensten Anwendungsbereichen zum Führen von Einschüben eingesetzt, wie Schubladen, Elektronikschränken, Backöfen, Geschirrspülmaschinen, Kühlschränken, Transportbehältern usw. Je nach Anwendungsbereich werden an die Teleskopführungen unterschiedliche Anforderungen gestellt, wie Belastbarkeit, Auszugslänge, Gleitverhalten, Form, Größe, Montage, Korrosionsbeständigkeit und Hitzebeständigkeit. Insbesondere beim Einsatz im industriellen Umfeld, aber auch in anderen Bereichen, wo die Teleskopschienen hohen Belastungen ausgesetzt sind, kommen noch Anforderungen an die statische Belastbarkeit und Laufverhalten hinzu.

Teleskopschienen bestehen aus mindestens zwei Führungsschienen, deren Profile ineinander laufen. Teleskopschienen können weiterhin als Wälz- oder Gleitführung ausgeführt werden.

Eine Gleitführung ist ganz allgemein eine Linearführung, bei der die verschiedenen Führungselemente nicht durch Wälzkörper getrennt werden. Teleskopschienen werden in den verschiedensten Anwendungsbereichen zum Führen von Einschüben eingesetzt, wie Schubladen, Elektronikschränken, Backöfen, Geschirrspülmaschinen, Kühlschränken usw. Je nach Anwendungsbereich werden an die Teleskopführungen unterschiedliche Anforderungen gestellt, wie Belastbarkeit, Auszugslänge, Gleitverhalten, Form, Größe, Montage, Korrosionsbeständigkeit und Hitzebeständigkeit. Insbesondere beim Einsatz in Backöfen oder Kühlschränken, aber auch in anderen Bereichen, wo die Teleskopschienen an Orten der Lebensmittelherstellung oder Lebensmittellagerung eingesetzt werden, kommen noch Anforderungen an die Lebensmittelechtheit und -unbedenklichkeit hinzu.

Insbesondere können Teleskopschienen zur Aufnahme von Einschüben in Paletten dienen. Aufgrund eines hohen Biegewiderstandsmoments finden zumeist Stahlprofile Verwendung bei der Gestaltung von Teleskopschienen.

In der EP 1 571 357 A1 ist eine Teleskopschienen für Einschübe beispielsweise im Möbelbau und Haushaltsgeräten unter der Verwendung von Stahlprofilen offenbart. Ein Beispiel für die Verwendung von Teleskopschienen in Flurförderfahrzeugen wie Gabelstapler findet sich in der CA 1 299 528 C.

Stahlprofil ist dabei eine Benennung sowohl des Bauteils selbst als auch seines jeweiligen Querschnitts, des Profils. Ein Stahlprofil kann zusammengesetzt und durch Schweißen, Verschrauben oder Vernieten verbunden sein. Bei handelsüblichen Stahlprofilen handelt es sich um genormte Walzträger oder auf der Abkantbank gebogene Stahlprofile. Sie unterscheiden sich von Walzträgern durch eine glattere Oberfläche und gerundete Kanten.

Bei dreischenkligen Stahlprofilen werden die äußeren Schenkel Flansch oder Gurt genannt. Der verbindende Mittelteil wird als Steg bezeichnet.

Im Gegensatz zu Vollwandträgern umschließen Hohlkastenträger und Hohlprofile einen Hohlraum und können neben zwei Flanschen auch zwei oder mehr Gurte besitzen und werden meist nicht zu den Stahlprofilen, sondern zu den Rohren oder Blechträgern gezählt, da neben dem Walzen weitere Schritte zur Herstellung erforderlich sind. Geläufige Profilformen sind T-Träger, I-Träger und Hohlkastenträger.

Paletten haben eine große Bedeutung in der Transportlogistik, um den Umschlag von Gütern möglichst schnell und effizient durchführen zu können. Die bedeutendsten Förderhilfsmittel sind neben Paletten, Container und Lagerkästen.

Paletten sind als Förderhilfsmittel ein wesentliches Element in der Logistik zur Bildung von Ladeeinheiten, das heißt, sie fassen mehrere einzelne Güter zu größeren Einheiten zusammen. Paletten oder auch Ladungsträger wie sie zuweilen aufgrund ihrer Ausbildung für bestimmte Zwecke genannt werden sind zumeist standardisierte Behältnisse, wie sie beispielsweise in der Europa-Norm EN 13698-1 definiert sind. Paletten - ähnlich wie der Container - verdeutlichen den Nutzen der Standardisierung von Ladungsträgern in der Materialflusstechnik. Die stets identischen Außen-Abmessungen erlauben einheitliches Verladen, Lagern, Handling, Kommissionieren.

Räder eingefahren werden, so ist ein Handhebel zu betätigen, mit welchem die Räder zwischen den beiden Positionen bewegt werden können.

Einen großen Fortschritt hinsichtlich Beladbarkeit der Palette auf mehreren Ladeböden brachte die in der DE 20 2010 015 486 U1 offenbarte Palette. Die Palette weist in beabstandeten Ladeebenen zwei Ladeböden zur Aufnahme des Ladegutes auf, wobei der obere Ladeboden derart beweglich gelagert ist, dass er zwischen einer Hochposition und einer Tiefposition bewegbar ist. Befindet sich der obere Ladeboden in Tiefposition, lässt sich der untere Ladeboden durch freie Zugänglichkeit einfacher beladen. Häufig kam allerdings der Wunsch auf, das Heben und Senken des zum Teil schweren Ladebodens zu erleichtern.

Ein wichtiger Aspekt ist die platzsparende Verstaubarkeit von Paletten auf geringsten Raum bei Leerfahrten oder Lagerung der Paletten. Hierzu brachte die DE 2006 013 402 U2 eine raffinierte Lösung, bei der durch Einklappen der Seitenwände der Palette diese in eine Ruhestellung parallel zur Ladefläche und innerhalb des Umrisses der Ladefläche ablegbar sind. Dies bedeutet eine wesentlich Platzersparnis bei Leerfahrten.

Hiervon ausgehend ist es Aufgabe der Erfindung, eine verbesserte Teleskopschiene anzugeben, welche hohe Lasten zu tragen vermag und andererseits für den Bediener mit nur leichtem Kraftaufwand handhabbar ist.

Die Aufgabe wird erfindungsgemäß durch eine Teleskopschiene mit den Merkmalen des Patentanspruch 1 gelöst. Weitere vorteilhafte Ausführungsformen ergeben sich aus den abhängigen Patentansprüchen.

Ausführungsmerkmale und Besonderheiten der Teleskopschiene sind:
- Material: Kaltgeformter Stahl
- Oberflächenvergütung: Elektrogalvanisch verzinkt und chromatiert (Schutz vor Korrosion)
- Schienenelemente sind gleitgelagert (guter Leichtlauf)
- Vollauszug (Eine Sperre bei vollausgezogener Schiene schützt vor Herausfallen der Schublade!)
- Seitenmontage
- trennbare Innenschiene
- sanfter und geräuscharmer Führungsmechanismus sowiezuverlässiger und stabiler Lauf des Führungssystems

Weitere vorteilhafte Ausführungsformen der Erfindung ergeben sich aus den abhängigen Patentansprüchen.

Weitere Merkmale, Vorteile und Wirkungen der Erfindung ergeben sich aus der nachfolgenden Beschreibung bevorzugter Ausführungsbeispiele der Erfindung, wie sie in der Zeichnung wiedergegeben sind. Es zeigen:
- Fig. 1a und Fig. 1b: eine Seitenansicht bzw Querschitt einer Teleskopschiene nach dem Stand der Technik,
- Fig. 2: eine perspektivische Ansicht einer gleitgelagerten Teleskopschiene im ausgezogenen Zustand,
- Fig. 3: eine vergrößerte, perspektivische Ansicht einer gleitgelagerten Teleskopschiene im zusammengeschobenen Zustand,
- Fig. 4a: einen Querschnitt einer gleitgelagerten Teleskopschiene im zusammengeschobenen Zustand,
- Fig. 4b: einen Querschnitt einer gleitgelagerten Teleskopschiene mit vertikaler Ausrichtung des inneren Schienenelements,
- Fig. 4c: einen Querschnitt einer gleitgelagerten Teleskopschiene mit mehrfachen Gleitkörpern
- Fig. 5: eine perspektivische Ansicht einer gleitgelagerten Teleskopschiene im demontierten Zustand
- Fig. 6: eine perspektivische Ansicht einer gleitgelagerten Teleskopschiene im ausgezogenen Zustand

Man unterscheidet je nach Auszugsmöglichkeit Teleskopschienen mit Teil-,Voll- und Überauszug. Je nach Schienentyp können Teleskopschienen mit einer sogenannten Schnellentriegelung ausgerüstet sein, die eine schnelle Trennung zweier Teleskopschienenteile (ermöglicht.

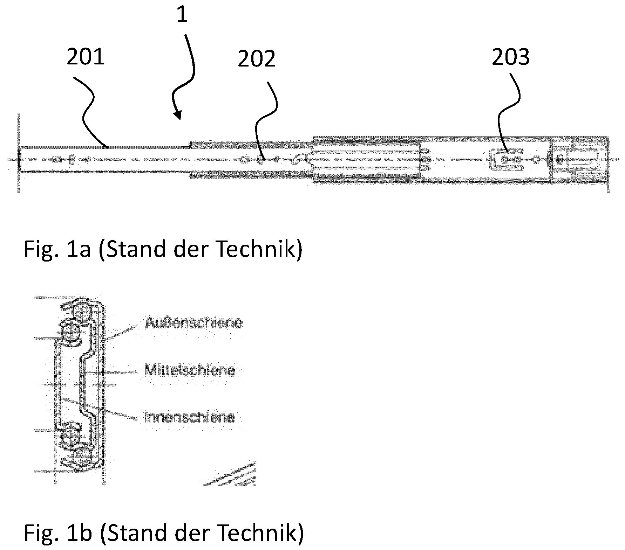

Bei der in Fig. 1 a und 1b gezeigten Teleskopschiene 1 handelt es sich um eine handelsübliche Ausführung, bestehend aus drei Schienenelementen 201, 202 und 203 bzw. Aussen,- Mittel- und Innenschiene, deren Profile ineinander laufen. Die dargestellte Teleskopschiene 1 ist mit Wälzlagerung ausgeführt.

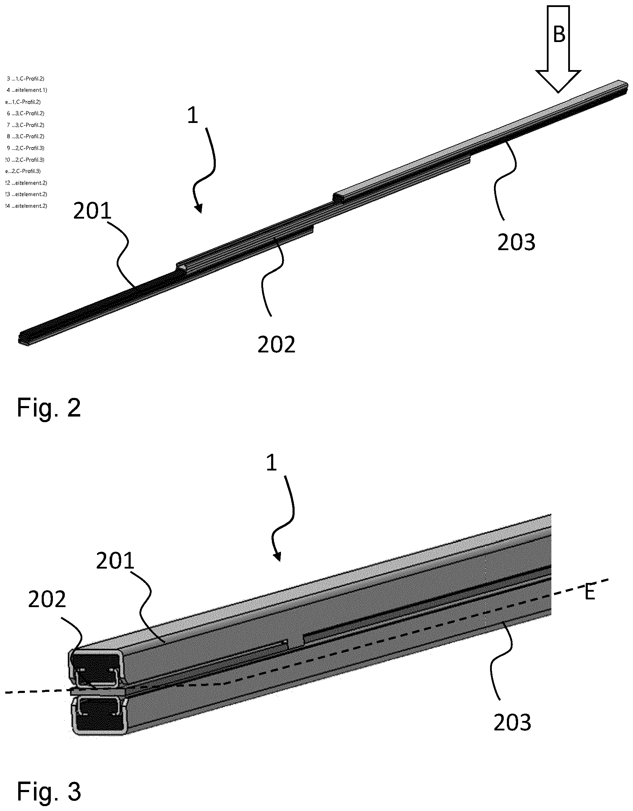

In den **Fig. 2 und 3** ist eine Ausführung der Teleskopschiene 1 mit drei teleskopierbar geführten Schienenelementen 201, 202, 203 gezeigt. In **Fig. 2** ist die Teleskopschiene 1 im ausgezogenen Zustand und im Querschnitt nach **Fig. 3** im eingeschobenen Zustand dargestellt. Die Schienenelemente 201, 202, 203 sind jeweils aus gezogenen Stahlprofilblechen ausgeführt und bezüglich einer mittig zwischen den beiden äußeren Schienenelementen 201, 203 gelegenen Symmetrieebene E vertikal übereinander angeordnet. Zwischen den beiden äußeren Schienenelementen 201, 203 ist das innenliegende Schienenelement 202 angeordnet. Typischer weise erfolgt eine Belastung der Teleskopschiene 1 im Belastungsfall (siehe Lastpfeil B) senkrecht zur Längsachse I und senkrecht zur Symmetrieebene E der Teleskopschiene 1, wobei die Längsachse I in der Symmetrieebene E liegt. Die Schienenelemente 201, 202, 203 sind vollausziehbar und durch eine mechanische Sperre 3 vor Herausfallen geschützt.

Das Auszugsverhältnis A, d.h. das Längenverhältnis zwischen der Länge lₐ und lₑ der Teleskopschiene im ausgezogenen bzw. eingeschobenen Zustand liegt bei A ≥ 2.

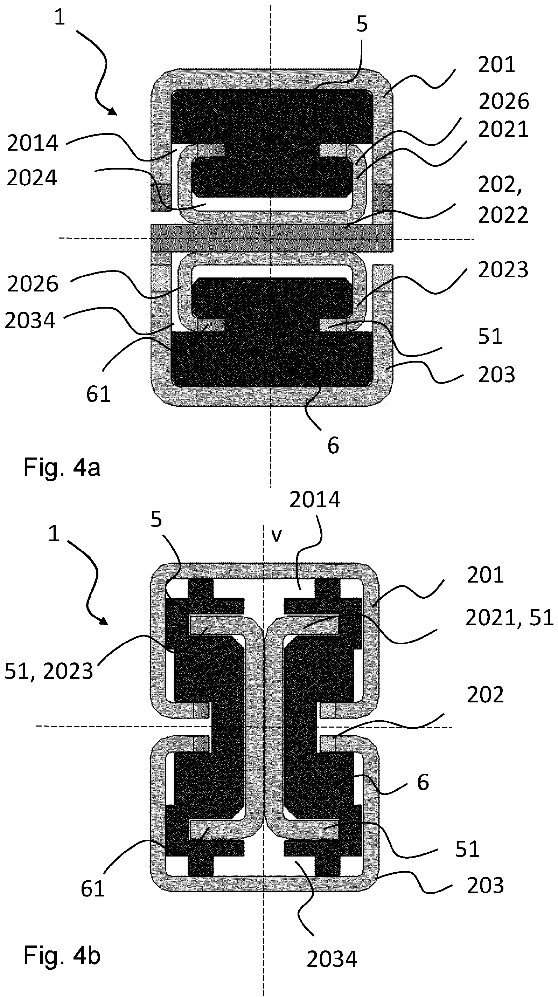

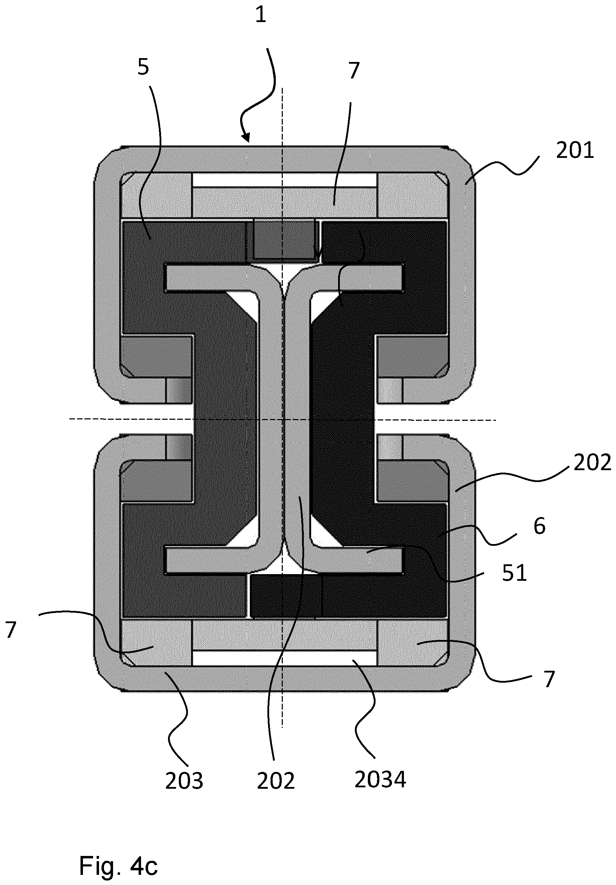

In den **Fig. 4a, 4b** **und** **4c** sind im Querschnitt Varianten der Teleskopschiene 1 im eingefahrenen Zustand dargestellt.

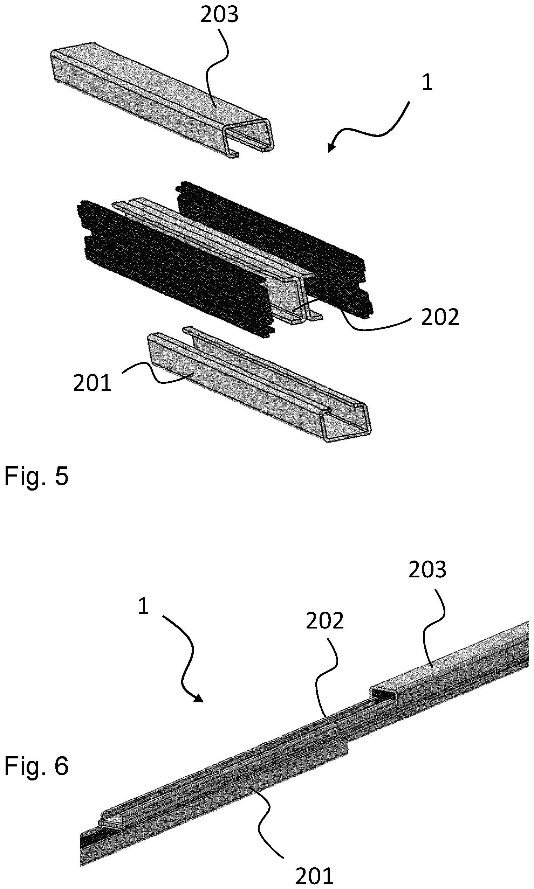

In der Ausführungsform nach **Fig. 4a** **und** **6** weisen die beiden äußeren Schienenelemente 201 und 203 jeweils einen U-förmigen Profilquerschnitt auf und sind mit ihren Öffnungen einander gegenüberliegend symmetrisch bzgl. einer Symmetrieachse h angeordnet. Zwischen den beiden äußeren Schienenelemente 201 und 203 ist das innenliegende Schienenelement 202 angeordnet. Es ist aus drei Profilabschnitten 2021, 2022 und 2023 zusammen gefügt. Die beiden äußeren Profilabschnitte 2021 und 2023 weisen einen C-förmigen Profilquerschnitt auf, deren Profilöffnung 2024 jeweils nach außen, in die Profilöffnung 2014 und 2034 der äußeren Schienenelementen 201 bzw 203 ragen. Die Profilabschnitte 2021 und 2023 sind miteinander stegseitig mitttels einer zwischenliegenden Stahlbandes 2022 und nicht weiter dargestellten Nieten verbunden. Die Schenkel 2026 der Profilabschnitte 2021 und 2023 sind öffnungsseitig rechtwinklig nach innen abgebogen und geben den Profilabschnitten 2021 und 2023 die charakteristische C-förmige Profilierung.

Die beiden äußeren Schienenelemente 201 und 203 sind jeweils mit einem innenliegenden, stabförmigen Gleitkörper 5 und 6 versehen und mittels Nietverbindungen and den beiden äußeren Schienenelemente 201 bzw. 203 festgelegt. Die Gleitkörper 5, 6 weisen einen etwa doppel-T-förmigen Profilquerschnitt auf, wobei der Steg der Gleitkörper 5, 6 mit den Gurten jeweils seitliche Nuten 51, 61 ausbilden, die von den Profilabschnitte 2021 bzw. 2023 umgriffen werden. Die Passung zwischen Nuten 51, 61 und den Profilabschnitte 2021 bzw. 2023 sind dabei als Gleitpassung ausgelegt, sodass sich eine von Hand längsverschiebliche Führung zwischen Gleitkörper 5 und 6 und dem innenliegenden Schienenelement 202 ergibt.

In der Ausführungsform nach der **Fig. 4b** **und** **5** weist das innenliegende Schienenelement 202 zwei U-förmige Profilabschnitte 2021 bzw. 2023 auf, die rückseitig, seitens des Steges miteinander durch Nietung verbunden sind. Hierbei ist das innenliegende Schienenelement 202 vertikal zur Symmetrieebene E innerhalb der Profilabschnitte 2021 bzw. 2023 gelegen sodass der auf der vertikalen Symmetrieachse v gelegene Steg des innenliegende Schienenelement 202 ein optimales Widerstandsbiegemoment ergibt. Die Gleitkörper 5, 6 kommen dabei links und rechts in den äußeren Schienenelemente 201 und 203 zu liegen und erstrecken sich jeweils in die Öffnungen 2014 und 2034 der äußeren Schienenelemente 201 bzw. 203. Sie weisen jeweils in Längsrichtung verlaufende Nuten 51 und 61 auf, wobei jeweils eine Nut 51 bzw. 61 einer Öffnung 2014 und 2034 zugeordnet ist. Die Gleitkörper 5, 6 sind zum flächigen Übertragen von Querkräften und Biegemomenten zwischen den äußeren Schienenelemente eine Anzahl horizontal orientierter Schulterflächen aufweisen

In der Ausführungsform nach der **Fig. 4c** ist im Unterschied zur Ausführungsform nach Fig. 4b der Gleitkörper 5, 6 mehrteilig ausgeführt. Die äußeren Schienenelemente 201, 203 sowie innenliegenden Schienenelement 202 jeweils eine Anzahl von ersten bzw. zweiten stabförmigen Gleitkörper 5, 6, 7 aufweisen, wobei beim Verschieben der äußeren Schienenelemente 201, 203 gegenüber dem innenliegenden Schienenelement 202 die ersten Gleitkörper 5, 6 auf den zweiten Gleitkörpern 7 gleiten. Hierdurch ergibt sich ein verbessertes und leichteres Gleitvehalten beim Bewegen der Schienenelemente 201, 202, 203.

Ausführungsmerkmale und Besonderheiten der Teleskopschiene:
- Material: Kaltgeformter Stahl
- Oberflächenvergütung: Elektrogalvanisch verzinkt und chromatiert (Schutz vor Korrosion)
- Schienenelemente sind gleitgelagert (guter Leichtlauf)
- Vollauszug (Eine Sperre bei vollausgezogener Schiene schützt vor Herausfallen der Schublade!)
- Seitenmontage
- trennbare Innenschiene
- sanfter und geräuscharmer Führungsmechanismus
- zuverlässiger und stabiler Lauf des Führungssystems

Als Gurte werden im Stahlbau die oberen und unteren Bänder eines Trägers mit "I-förmigem" ("Doppel-T-förmigem") Querschnitt bezeichnet, die von einem durchgehenden Steg auf Abstand gehalten werden. Die Gurte nehmen vor allem die Belastung aus Biegung auf. Stahl- Profile werden normalerweise aus sendzimirverzinktem oder rostfreiem Stahl herstellt.

### Bezugszeichenliste

- 1: Teleskopschiene

- 201, 203: Äußere Schienenelemente
- 202: Inneres Schienenelement

- 2021, 2023: Profilabschnitt
- 2014, 2024, 2034: Profilöffnung
- 2022: Stahlband
- 2026: Schenkel
- 3: Sperre
- 5, 6, 7: Gleitkörper
- 51, 61: Nut
- 52, 62: Schlterfläche

- B: Lastpfeil
- E: Symmetrieebene
- lₐ: Länge ausgezogen
- lₑ: Länge eingezogen
- a: Längsachse
- h: horizontale Symmetrieachse
- v: vertikale Symmetrieachse

## Patentansprüche

1. Teleskopschiene (1) für die Aufnahme von Einschüben oder Ladegut die als Gleitschiene ausgebildet ist und wenigstens drei gleitend gegeneinander verschiebbar angeordnete Schienenelemente (201, 202, 203) aufweist, wobei
∘ die Schienenelemente (201, 202, 203) aus Metall, vorzugsweise aus Stahl, ausgeführt sind,
∘ zumindest **zwei äußere Schienenelemente** (201, 203) jeweils einen Abschnitt mit U- oder C-förmigen Querschnitt aufweisen und mit Ihren Öffnungen (2014, 2034) einander gegenüber liegend, zueinander parallel verschieblich geführt sind,
∘ zwischen den beiden äußeren Schienenelementen (201, 203) das dritte, **innenliegende Schienenelement** (202) angeordnet und jeweils gegenüber den beiden äußeren Schienenelementen (201, 203) separat verschieblich geführt ist,
∘ die beiden **äußeren Schienenelemente** (201, 203) in ihrer Öffnung (2014, 2034) jeweils einen Gleitkörper (5, 6) aufnehmen welche jeweils mit dem dritten Schienenelement (202) gleitverschieblich geführt sind,
∘ die **Gleitkörper** (5, 6) zum flächigen Übertragen von Querkräften und Biegemomenten zwischen den äußeren Schienenelementen (201, 203) eine Anzahl horizontal orientierter Schulterflächen aufweisen und
∘ das innenliegende Schienenelement (202) zwei zueinander im Wesentlichen **symmetrische Profilabschnitte** (2021, 2023) aufweist, wobei die Symmetrieachse (h, v) des innenliegenden Schienenelements (202) horizontal oder vertikal bezüglich der unteren und oberen äußeren Schienenelemente (201, 203) angeordnet sind.

2. Teleskopschiene nach Anspruch 1, **dadurch gekennzeichnet, dass** die Gleitkörper (5, 6, 7) jeweils aus einem formbeständigen Polymer mit geringem Reibkoeffizienten, vorzugsweise einem Polyamid oder Polytetrafluorethylen ausgeführt ist.

3. Teleskopschiene nach Anspruch 1 oder 2, **dadurch gekennzeichnet, dass** die Gleitkörper (5, 6, 7) einen zur Aufnahme in den äußeren Schienenelementen (201, 203) an deren Querschnitt angepassten Querschnitt aufweisen, welcher vorzugsweise rechteckig oder trapezförmig ausgeführt ist.

4. Teleskopschiene nach einem der vorhergehenden Ansprüche, **dadurch gekennzeichnet, dass** die Gleitkörper (5, 6, 7) eine beidseits der Flanken der Schienenelemente (201, 202, 203) in Längsrichtung verlaufende Nut (51, 61) aufweisen, in welche jeweils beidseits des innenliegenden Schienenelements (202) angebrachte Führungen zur Verschieblichkeit der Schienenelemente (201, 202, 203) angebracht sind.

5. Teleskopschiene nach einem der vorhergehenden Ansprüche, **dadurch gekennzeichnet, dass** die Gleitkörper (5, 6, 7) jeweils
• einerseits von einem äußeren Schienenelement (201, 203) zumindest mit ihrem Querschnitt zumindest teilflächig umfasst und gehalten werden und
• andererseits von einem Profilabschnitt des innenliegende Schienenelement (202) umfasst und in eine in Längsrichtung verlaufende Nut (51, 61) zur gleitverschieblichen Führung eingreift.

6. Teleskopschiene nach einem der vorhergehenden Ansprüche, **dadurch gekennzeichnet, dass** das innenliegende Schienenelement (202) zwei zueinander im Wesentlichen symmetrische Profilabschnitte (2021, 2023) aufweist, die zum Eingreifen in die gleitkörperseitigen Nuten (51, 61) einen offenen Profilquerschnitt mit vorzugsweise C-, U- oder Ω-förmigen Querschnitt aufweisen.

7. Teleskopschiene nach Anspruch 6, **dadurch gekennzeichnet, dass** das innenliegende Schienenelement (202) derart horizontal oder vertikal bezüglich der unteren und oberen äußeren Schienenelemente (201, 203) angeordnet sind, dass das Biegewiderstandsmoment Wₐₓ der Teleskopschiene (1) maximal ist.

8. Teleskopschiene nach einem der vorhergehenden Ansprüche, **dadurch gekennzeichnet, dass** die äußeren Schienenelemente (201, 203) sowie innenliegenden Schienenelement (202) jeweils eine Anzahl von ersten bzw. zweiten stabförmigen Gleitkörper (7) aufweisen, wobei beim Verschieben der äußeren Schienenelemente (201, 203) gegenüber dem innenliegenden Schienenelement (202) die ersten Gleitkörper (5, 6) auf den zweiten Gleitkörpern (7) gleiten.

## Claims

1. Telescopic rail (1) for the reception of inserts or loads, which is designed as a sliding rail and has at least three rail elements (201, 202, 203) arranged so as to be slideably displaceable relative to one another, wherein
∘ the rail elements (201, 202, 203) are made of metal, preferably steel,
∘ at least **two outer rail elements** (201, 203) each have a portion comprising a U-shaped or C-shaped cross-section and are displaceably guided parallel to one another, with their openings (2014, 2034) opposite one another,
∘ the third, **inner rail element** (202) is arranged between the two outer rail elements (201, 203) and is individually displaceably guided relative to the two outer rail elements (201, 203),
∘ each of the two **outer rail elements** (201, 203) receives a sliding body (5, 6) in its opening (2014, 2034), which are each guided in a slideably displaceable manner with the third rail element (202),
∘ the **sliding bodies** (5, 6) have a number of horizontally oriented shoulder surfaces for the surface transfer of transverse forces and bending moments between the outer rail elements (201, 203) and
∘ the inner rail element (202) has two substantially mutually **symmetrical profile portions** (2021, 2023), wherein the axis of symmetry (h, v) of the inner rail element (202) is arranged horizontally or vertically in relation to the lower and upper outer rail elements (201, 203).

2. Telescopic rail according to claim 1, **characterized in that** the sliding bodies (5, 6, 7) are each made of a dimensionally stable polymer which has a low coefficient of friction, preferably a polyamide or polytetrafluoroethylene.

3. Telescopic rail according to claim 1 or claim 2, **characterized in that** the sliding bodies (5, 6, 7) have a cross-section adapted to the cross-section of the outer rail elements (201, 203) for reception in said outer rail elements, which cross-section is preferably rectangular or trapezoidal.

4. Telescopic rail according to any of the preceding claims,
**characterized in that** the sliding bodies (5, 6, 7) have a groove (51, 61) which runs in the longitudinal direction on both sides of the flanks of the rail elements (201, 202, 203), in which groove guides are mounted on both sides of the inner rail element (202) for the displaceability of the rail elements (201, 202, 203).

5. Telescopic rail according to any of the preceding claims,
**characterized in that** the sliding bodies (5, 6, 7), respectively
• on the one hand, are covered and held over at least part of their surface by an outer rail element (201, 203) at least by the cross-section thereof, and
• on the other hand, covered by a profile portion of the inner rail element (202) and engages in a groove (51, 61) which runs in the longitudinal direction for slideably displaceable guidance.

6. Telescopic rail according to any of the preceding claims,
**characterized in that** the inner rail element (202) has two profile portions (2021, 2023) which are substantially symmetrical to one another and which have an open profile cross-section which has a preferably C-shaped, U-shaped or Ω-shaped cross-section for engaging in the sliding-body-side grooves (51, 61).

7. Telescopic rail according to claim 6, **characterized in that** the inner rail element (202) is arranged horizontally or vertically in relation to the lower and upper outer rail elements (201, 203) such that the bending resistance moment Wₐₓ of the telescopic rail (1) is at its maximum.

8. Telescopic rail according to any of the preceding claims,
**characterized in that** the outer rail elements (201, 203) and the inner rail element (202) each have a number of first and second rod-shaped sliding bodies (7), the first sliding bodies (5, 6) sliding on the second sliding bodies (7) when the outer rail elements (201, 203) are displaced relative to the inner rail element (202).

## Revendications

1. Rail télescopique (1) pour la réception de tiroirs ou de marchandises transportées, lequel est conçu sous forme de glissière et présente au moins trois éléments de rail (201, 202, 203) disposés de manière à pouvoir coulisser en glissant les uns par rapport aux autres, dans lequel
∘ les éléments de rail (201, 202, 203) sont réalisés en métal, de préférence en acier,
∘ au moins **deux éléments de rail extérieurs** (201, 203) présentent respectivement une section comportant une section transversale en forme de U ou de C et sont guidés avec leurs ouvertures (2014, 2034) opposées l'une à l'autre, de manière à pouvoir coulisser parallèlement l'un à l'autre,
∘ le troisième **élément de rail intérieur** (202) est disposé entre les deux éléments de rail extérieurs (201, 203) et est guidé séparément de manière coulissante et respectivement par rapport aux deux éléments de rail extérieurs (201, 203),
∘ les deux **éléments de rail extérieurs** (201, 203) reçoivent dans leur ouverture (2014, 2034) respectivement un corps de glissement (5, 6) qui est respectivement guidé de manière à coulisser en glissant avec le troisième élément de rail (202),
∘ les **corps de glissement** (5, 6) présentent un certain nombre de surfaces d'épaulement orientées horizontalement pour la transmission à plat de forces transversales et de moments de flexion entre les éléments de rail extérieurs (201, 203), et
∘ l'élément de rail intérieur (202) présente deux **sections formant profilés** (2021, 2023) sensiblement symétriques l'une par rapport à l'autre, dans lequel l'axe de symétrie (h, v) de l'élément de rail intérieur (202) est disposé horizontalement ou verticalement par rapport aux éléments de rail extérieurs (201, 203) inférieur et supérieur.

2. Rail télescopique selon la revendication 1, **caractérisé en ce que** les corps de glissement (5, 6, 7) sont respectivement réalisés en polymère indéformable à faible coefficient de friction, de préférence en polyamide ou en polytétrafluoroéthylène.

3. Rail télescopique selon la revendication 1 ou 2, **caractérisé en ce que** les corps de glissement (5, 6, 7) présentent une section transversale adaptée à la section transversale des éléments de rail extérieurs (201, 203) pour leur réception, laquelle section transversale adaptée est de préférence réalisée de manière rectangulaire ou trapézoïdale.

4. Rail télescopique selon l'une des revendications précédentes,
**caractérisé en ce que** les corps de glissement (5, 6, 7) présentent une rainure (51, 61) s'étendant dans la direction longitudinale de part et d'autre des flancs des éléments de rail (201, 202, 203), dans laquelle sont respectivement montés des guides montés de part et d'autre de l'élément de rail intérieur (202) pour permettre le coulissement des éléments de rail (201, 202, 203).

5. Rail télescopique selon l'une des revendications précédentes,
**caractérisé en ce que** les corps de glissement (5, 6, 7) sont respectivement
• d'une part, entourés et maintenus au moins partiellement par un élément de rail extérieur (201, 203), au moins par leur section transversale, et
• d'autre part, entourés par une section formant profilé de l'élément de rail intérieur (202) et viennent en prise dans une rainure (51, 61) s'étendant dans la direction longitudinale pour le guidage de manière à coulisser en glissant.

6. Rail télescopique selon l'une des revendications précédentes,
**caractérisé en ce que** l'élément de rail intérieur (202) présente deux sections formant profilés (2021, 2023) sensiblement symétriques l'une par rapport à l'autre, lesquelles présentent une section formant profilé ouverte, de préférence en forme de C, de U ou de Ω, pour la mise en prise dans les rainures (51, 61) côté corps de glissement.

7. Rail télescopique selon la revendication 6, **caractérisé en ce que** l'élément de rail intérieur (202) est disposé horizontalement ou verticalement par rapport aux éléments de rail extérieurs (201, 203) inférieur et supérieur de telle sorte que le moment de résistance à la flexion Wₐₓ du rail télescopique (1) est maximal.

8. Rail télescopique selon l'une des revendications précédentes,
**caractérisé en ce que** les éléments de rail extérieurs (201, 203) ainsi que l'élément de rail intérieur (202) présentent respectivement un certain nombre de premiers et de seconds corps de glissement (7) en forme de tige, dans lequel, lorsque les éléments de rail extérieurs (201, 203) sont coulissés par rapport à l'élément de rail intérieur (202), les premiers corps de glissement (5, 6) glissent sur les seconds corps de glissement (7).
